## Europäisches Patentamt
## European Patent Office
## Office européen des brevets

(11) Numéro de publication: **0 032 858**
**B1**

(12) **FASCICULE DE BREVET EUROPEEN**

(45) Date de publication du fascicule du brevet: **12.12.84**

(21) Numéro de dépôt: **81400041.0**

(22) Date de dépôt: **14.01.81**

(51) Int. Cl.³: **D 04 H 3/07** // B29D3/02

(54) **Structure tridimensionnelle annulaire.**

(30) Priorité: **17.01.80 FR 8001009**

(43) Date de publication de la demande:
**29.07.81 Bulletin 81/30**

(45) Mention de la délivrance du brevet:
**12.12.84 Bulletin 84/50**

(84) Etats contractants désignés:
**DE GB IT SE**

(56) Documents cités:
**FR-A-2 421 056**
**FR-A-2 424 888**
**GB-A-2 040 805**
**US-A-3 577 294**

(73) Titulaire: **SOCIETE EUROPEENNE DE
PROPULSION (S.E.P.) Société Anonyme dite:
3, avenue du Général de Gaulle
F-92800 Puteaux (FR)**

(72) Inventeur: **Maistre, Michel Antoine
19, rue d'Austerlitz
F-33200 Bordeaux (FR)**

(74) Mandataire: **Joly, Jean-Jacques et al
CABINET BEAU DE LOMENIE 55, rue
d'Amsterdam
F-75008 Paris (FR)**

Courier Press, Leamington Spa, England.

**Description**

La présente invention concerne une structure tridimensionnelle annulaire constituée par l'entrecroisement régulier d'éléments filiformes répartis en plusieurs familles d'éléments, chaque famille étant constituée d'éléments de même type présentant une même disposition particulière au sein de la structure.

Un structure de ce type est notamment utilisable comme structure de renfort pour un matériau composite destiné à la réalisation de pièces de révolution devant présenter une grande cohésion et des propriétés uniformes en tous points d'une même circonférence. Une application typique de la structure est la réalisation d'un matériau composite carbone-carbone (structure de renfort en éléments filiformes de carbone densifiée par une matrice de carbone) destiné à la fabrication de tuyères ou de pièces de tuyères de moteurs fusées.

Plusieurs structures tridimensionnelles annulaires ont déjà été proposées.

Ainsi il est connu de réaliser des structures annulaires constituées d'une famille d'éléments rectilignes radiaux, c'est-à-dire perpendiculaires à l'axe de la structure, d'une famille d'éléments rectilignes axiaux, c'est-à-dire parallèles à l'axe et d'une famille d'éléments incurvés circonférentiels. Par éléments circonférentiels, on entend ici des éléments disposés en nappes cylindriques soit sous forme de spires circulaires distinctes situées à intervalles réguliers dans des plans perpendiculaires à l'axe, soit sous forme de bobinages hélicoïdaux de faible pas avec des spires dont l'inclinaison par rapport aus plans perpendiculaires à l'axe est aussi petite que possible. Une telle structure est décrite dans la demande de brevet français n° 2 408.676.

Il est aussi connu de réaliser une structure annulaire constituée d'une première famille d'éléments incurvés hélicoïdaux disposés en nappes cylindriques coaxiales suivant des trajectoires hélicoïdales de même pas et de même sens, d'une deuxième famille d'éléments incurvés hélicoïdaux disposés en nappes cylindriques coaxiales alternées avec celles de la première famille suivant des trajectoires hèlicoïdales de même pas que pour la première famille mais de sens opposé, et d'une famille d'éléments rectilignes radiaux.

Un point commun à ces deux structures annulaires à trois familles connues est de comporter deux familles disposées en couches adjacentes séparées les unes des autres par des surfaces de séparation traversées uniquement par les éléments rectilignes de la famille d'éléments radiaux. Ces éléments rectilignes ne peuvent assurer un verrouillage absolu des couches des deux autres familles. Il y a alors pour ces couches une possibilité de délaminage, c'est-à-dire de décohésion parallèlement aus éléments radiaux. On conçoit qu'une telle possibilité soit hautement indésirable lorsque l'un des buts visés est la fabrication de pièces présentant une grande cohésion.

Pour éliminer ce risque de décohésion, il a été proposé dans la demande de brevet français n° 2 421.056 une structure annulaire constituée de quatre familles d'éléments filiformes, en particulier une structure du type comportant une première et une seconde famille d'éléments méridens rectilignes, obliques par rapport à l'axe de la structure et formant dans chaque famille des nappes méridiennes réparties régulièrement autour de l'axe de la structure et une troisième et une quatrième famille d'éléments hélicoïdaux formant dans chaque famille des nappes cylindriques de même axe que la structure et réparties régulièrement en direction radiale, l'inclinaison par rapport à l'axe des éléments de la première famille étant égale mais de sens opposé à celle des éléments de la seconde famille et les trajectoires hélicoïdales des éléments de la troisième famille ayant le même pas que celles des éléments de la quatrième famille, mais avec un sens opposé, ce pas étant tel que chaque spire d'un élément hélicoidal embrasse une pluralité d'éléments méridiens rectilignes dans chacune desdites nappes méridennes.

Par élément méridien oblique, on entend ici un élément situé dans un plan méridien et faisant avec l'axe de la structure un angle différent de 0°, 90° et 180°.

On obtient certes un réel verrouillage des couches adjacentes de deux familles par les éléments des deux autres familles qui traversent les surfaces de séparation entre ces couches avec des inclinaisons différentes par rapport à ces surfaces. Toutefois, cette structure à quatre familles ne peut être réalisée que suivant certaines dispositions, ce qui limite les applications possibles de la structure.

Aussi, la présente invention a-t-elle pour but de fournir une structure tridimensionnelle annulaire ne présentant pas de risque de décohésion et pouvant être adaptée en vue de satisfaire des exigences particulières tenant notamment à la disposition des éléments ou à la distribution spatiale des propriétés de la structure, tout en gardant une valeur élevée à la teneur volumique en éléments de renfort, c'est-à-dire au rapport entre le volume réel occupé par les éléments de la structure et le volume apparent de celle-ci.

Ce but est atteint par une structure du type précité comportant deux familles d'éléments méridiens obliques et deux familles d'éléments hélicoïdaux, structure caractérisée en ce qu'elle comporte au moins une cinquième famille choisie dans le groupe constitué par une famille d'éléments radiaux formant des nappes méridiennes réparties régulièrement autour de l'axe de la structure, une famille d'éléments circonférentiels formant des nappes cylindriques de même axe que la structure et réparties régulièrement en direction radiale et

**0 032 858**

une famille d'éléments axiaux formant des nappes méridiennes ou cylindriques réparties régulièrement dans la structure.

Les éléments de chaque famille constitutive de la structure forment des nappes méridiennes ou cylindriques dans lesquelles ils sont espacés régulièrement les uns des autres et ont même disposition.

La première et la seconde famille étant formées d'éléments méridiens obliques ayant par rapport à l'axe de la structure, des inclinaisons égales mais de sens opposés l'un à l'autre, elles forment un ensemble pratiquement symétrique par rapport à des plans méridiens et à des plans perpendiculaires à l'axe. Il en est de même pratiquement pour l'ensemble constitué par la troisième et la quatrième famille puisqu'elles sont formées d'éléments disposés en couches cylindriques concentriques suivant des trajectoires en hélice de même pas mais de sens opposés l'un à l'autre. Puisque la ou chaque famille supplémentaire est une famille d'éléments radiaux, circonférentiels ou axiaux, la structure dans son ensemble est pratiquement symétrique suivant des plans méridiens et perpendiculaires à l'axe.

Un autre avantage de la structure conforme à l'invention réside dans le fait que l'adjonction d'une famille d'éléments radiaux, circonférentiels ou axiaux permet, suivant le besoin, de conférer certaines propriétés mécaniques ou physiques aux pièces à produire, grâce à la présence de renforts suivant l'une ou plusieurs des trois "directions" principales de l'anneau.

Par ailleurs, du fait que la structure conforme à l'invention comporte au moins cinq familles différentes, on peut obtenir une structure équilibrée proche de l'isotropie lorsque cela est désiré.

Enfin, le nombre de familles d'éléments ayant des dispositions différentes dans la structure conforme à l'invention réduit à néant la possibilité de décohésion.

Différents exemples de réalisation d'une structure conforme à l'invention sont décrits en détail ci-après à titre indicatif mais non limitatif.

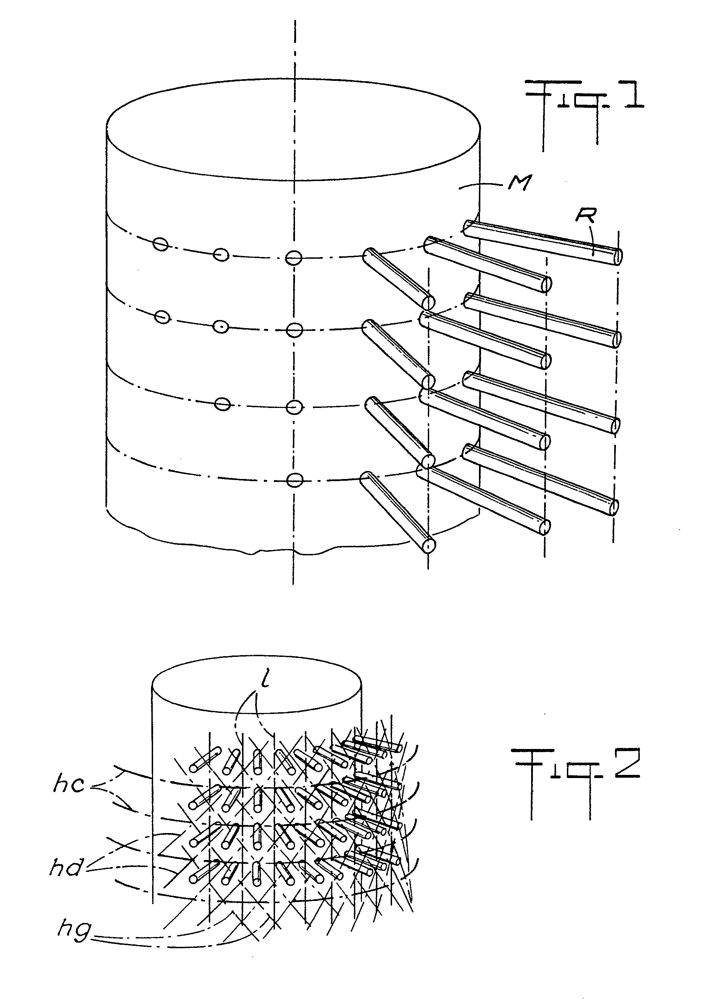

On se réfèrera aux figures 1 à 3 du dessin joint qui illustrent schématiquement différentes étapes successives de construction d'une structure conforme à l'invention.

Exemple 1

Un mandrin cylindrique M en graphite de 80 mm de diamètre et de 300 mm de long est percé de 1296 trous de 3 mm de diamètre et de 10 mm de profondeur. Ces trous, orientés perpendiculairement à l'axe du mandrin, sont régulièrement espacés avec un décalage angulaire de 10° sur une hélice dont le pas est égal à 7,2 mm. Dans chacun de ces trous est ensuite fixée une baguette rigide d'un diamètre de 3 mm et d'une longueur de 80 mm, en sorte qu'une fois mise en place, elle dépasse de 70 mm de la surface du mandrin. Ces baguettes sont faites de fibres de carbone unidirectionnelles liées par une résine carbonisable telle qu'une résine phénolique. Seules quelques unes de ces baguettes sont représentées sur la figure 1 pour la clarté du dessin. Les 1296 baguettes se trouvent ainsi disposées en 36 nappes méridiennes réparties régulièrement autour de l'axe de la structure, chaque nappe comportant 36 baguettes parallèles entre elles, régulièrement espacées de 7,2 mm et perpendiculaires à l'axe. Elles constituent la famille d'éléments radiaux R de la structure en construction.

Ces baguettes régulièrement disposées délimitent entre elles des couloirs qui préfigurent l'orientation des différents autres familles d'éléments.

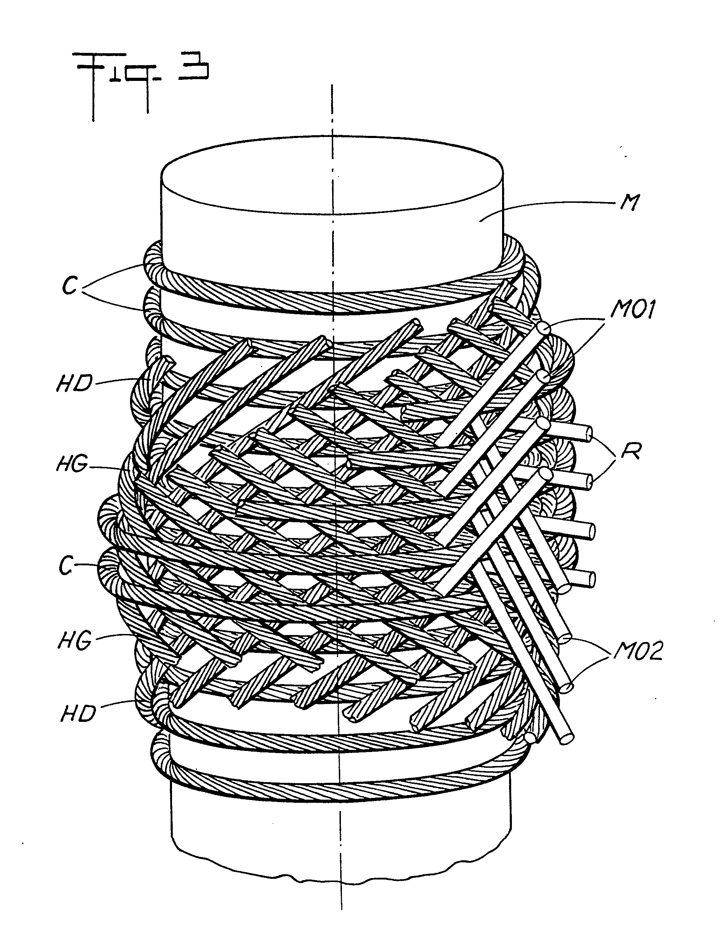

Comme on peut le voir sur la figure 2, un de ces couloirs suit une trajectoire hélicoïdale hc avec un pas de 7,2 mm ce qui peut être considéré pratiquement comme une trajectoire circonférentielle. Dans ce couloir qui se développe sur 35 spires régulièrement espacées, on dispose un fil de carbon souple de 3 mm de diamètre formé de plus de 100.000 fibres de carbone assemblées entre elles par torsion suivant une technique classique de l'industrie textile. Cette première couche bobinée constitue la première nappe cylindrique de la famille d'éléments circonférentiels C (figure 3).

Les baguettes radiales délimitent également 36 couloirs longitudinaux l (figure 2) dans lesquels on pourrait mettre en place, si l'on voulait, des éléments rectilignes parallèles à l'axe pour constituer une famille d'éléments axiaux, mais on n'use pas de cette possibilité dans l'exemple présent.

Les baguettes délimitent enfin des couloirs hélicoïdaux obliques par rapport aux couloirs longitunaux et circonférentiels. Il y a ainsi 36 couloirs hélicoïdaux de même pas dans chacun des deux sens de rotation: "à droite" (hd) et "à gauche" (hg) par analogie avec les sens des pas de vis, ou respectivement "en Z" et "en S" par analogie avec les sens de torsion des fils textiles.

On dispose alors par-dessus la première couche en place une deuxième couche cylindrique de fils de carbone dans le couloirs hélicoïdaux à droite. Cette deuxième couche constitue la première nappe hélicoïdale "à droite" HD. On utilise pour celà un fil continu d'un diamètre de 2 mm qu'on dépose successivement dans tous les couloirs hélicoïdaux à droite en lui faisant décrire un parcours en va et vient entre les deux faces latérales du cylindre formé par les baguettes radiales.

On dispose ensuite, de la même façon, une troisième couche de fils de 2 mm dans les couloirs hélicoïdaux à guache constituant ainsi la première nappe cylindrique hélicoïdale "à gauche" HG.

On poursuit la mise en place des nappes cylindriques superposées en répétant régulièrement et dans l'ordre la séquence qui vient d'être décrite:

— une nappe circonférentielle en fil de 3 mm de diamètre,
— une nappe hélicoïdale à droite en fil de 2 mm de diamètre,
— une nappe hélicoïdale à gauche en fil de 2 mm de diamètre.

Quand cette séquence a été reproduite 10 fois, la superposition de 30 couches de fils ainsi mises en place atteint une épaisseur de 70 mm de sorte que les baguettes radiales n'émergent plus du bobinage. En plus de la famille d'éléments radiaux, on a alors formé une famille d'éléments circonférentiels, une famille d'éléments hélicoïdaux à troite et une famille d'éléments hélicoïdaux à gauche, chacune de ces trois dernières familles étant constituée de nappes coaxiales de même axe que la structure, dans lesquelles les éléments sont régulièrement espacés les uns des autres, et qui sont régulièrement réparties au sein de la structure en direction radiale.

L'ensemble des nappes cylindriques de la structure est constitué par la juxtaposition en direction radiale de groupes semblables constitués d'une nappe cylindrique d'éléments circonférentiels C, d'une nappe cylindrique d'éléments hélicoïdaux à droite HD et d'une nappe cylindrique d'éléments hélicoïdaux à gauche HG.

On poursuit alors la réalisation de la structure par la mise en place d'éléments rectilignes dans les espaces libres alignés qui existent entre les éléments des quatre familles déjà mises en place. Les éléments régulièrement entrecroisés de ces quatre familles délimitent en effet des alignements de canaux rectilignes parallèles entre eux et régulièrement espacés, disposés suivant des plans méridiens intercalés entre les nappes méridiennes de baguettes radiales. Ces canaux qui sont obliques par rapport à l'axe de la structure se répartissent en deux familles suivant le sens de leur inclinaison par rapport à cet axe. Dans le case de l'exemple décrit ici, ces angles valent approximativement 44° et 136°, et dans chacun des canaux, il est pissible d'introduire un élément rectiligne de 2 mm de diamètre et de 100 mm de long.

La construction de la structure est donc poursuivie en comblant tous ces canaux par des baguettes rigides ayant ces dimensions. Ces baguettes, comme celles de 3 mm, sont faites de fibres de carbone liées par une résine carbonisable. Elles constituent deux familles d'éléments méridiens obliques MO1 et MO2.

Les éléments méridiens obliques de chacune de ces deux familles forment des nappes méridiennes qui sont régulièrement réparties autour de l'axe de la structure et dans lesquelles les éléments sont parallèles entre eux et régulièrement espacés. Une nappe méridienne d'éléments MO1 et une nappe méridienne

voisine d'éléments MO2 se trouvent entre deux nappes méridiennes consécutives d'éléments radiaux. La structure comporte ainsi un ensemble de nappes méridiennes constitué par la répétition régulière autour de l'axe de la structure de la séquence formée d'une nappe méridienne d'éléments MO1, d'un nappe méridienne d'éléments MO2 et d'une nappe méridienne d'éléments R.

Quand tous les canaux ont ainsi été comblés, la construction de la structure annulaire est terminée. Cette structure est finalement constituée de six familles d'éléments filiformes dont trois sont faites d'éléments incurvés et trois sont faites d'éléments rectilignes. La teneur volumique en éléments de renfort va en décroissant depuis le diamètre intérieur jusqu'au diamètre extérieur, ce qui est parfaitement normal pour ce type de structure, étant donné le caractère divergent des plans méridiens. Ce taux volumique vaut 0,638 au niveau du diamètre intérieur et 0,389 au niveau du diamètre extérieur.

Cette structure ne comporte aucun interface entre deux nappes parallèles qui ne soit pas traversé par au moins deux familles d'éléments ayant des orientations différentes assurant un parfait verrouillage en sorte qu'elle est intégralement indélaminable.

Cette structure peut ensuite être transformée en matériau composite par n'importe laquelle des techniques connues pour introduire une matrice dans une structure tridimensionnelle. La transformation en composite carbone-carbone de la structure décrite ci-dessus peut se faire are exemple par décomposition pyrolytique d'hydrocarbures gazeux ou par imprégnation au moyen d'un résine carbonisable ou au moyen de brai suivie de carbonisation avec ou sans pression.

Le mandrin sur lequel a été réalisée la structure ne fait pas partie de celle-ci et doit normalement être éliminé. Ceci peut se faire à n'importe quel moment avant, pendant ou après la transformation en matériau composite, le moment choisi pouvant dépendre du procédé de transformation adopté. L'élimination du mandrin peut se faire par usinage ou par dissolution de son matériau constitutif.

Il va de soi que l'exemple qui vient d'être décrit en détail ne représente que l'une des multiplex formes que peut prendre la structure selon l'invention. En particulier, cette structure peut être réalisée en n'importe quel matériau susceptible de prendre la forme d'éléments filiformes rectilignes ou incurvés quelles que soient la forme et les dimensions de leur section, et rien n'empêche d'associer au sein d'une même structure plusieurs matériaux de natures différentes.

Exemple 2

La structure obtenue suivant cet exemple diffère de celle de l'exemple précédent du fait qu'elle est constituée par cinq familles d'éléments dont deux sont faites d'éléments hélicoïdaux, une est faite d'éléments axiaux et deux sont faites d'éléments méridiens obliques.

Cette structure peut être obtenue en procédant comme dans l'exemple précédent à la différence près que la famille d'éléments circonférentiels d'une part, et la famille d'éléments radiaux d'autre part, sont supprimées et remplacées par une seule famille d'éléments axiaux de 3 mm de diamètre, ces éléments axiaux prenant place le long de chacune des lignes d'intersection entre les nappes respectivement cylindrique et méridiennes des deux familles remplacées.

Les éléments axiaux forment des nappes méridiennes régulièrement réparties autour de l'axe de la structure et dans lesquelles ils sont régulièrement espacés les uns des autres. Les nappes méridiennes de la structure sont constituées par la répétition régulière autour de l'axe de la structure de la séquence formée par une nappe méridienne d'éléments MO1, une nappe méridienne d'éléments MO2 et une nappe méridienne d'éléments axiaux.

On peut aussi considérer que les éléments axiaux forment des nappes cylindriques coaxiales de même axe que la structure, réparties régulièrement en direction radiale et dans lesquelles les éléments sont régulièrement espacés les uns des autres. Les nappes cylindriques de la structure sont alors constituées par la juxtaposition en direction radiale de groupes semblables constitués chacun successivement par un nappe cylindrique d'éléments axiaux, une nappe cylindrique d'éléments hélicoïdaux à droite HD et une nappe cylindrique d'éléments hélicoïdaux à gauche HG.

Exemple 3

Dans une structure telle que décrite dans l'exemple 1, on remplace la motié des éléments circonférentiels de cette structure de départ (une nappe cylindrique sur deux) et la moitié de ses éléments radiaux (une nappe méridienne sur deux) par une famille d'éléments axiaux de 3 mm de diamètre, ces éléments trouvant place le long de chacune des lignes d'intersection des nappes cylindriques et méridiennes supprimées.

Comme indiqué ci-dessus à propos de l'exemple 2, les éléments axiaux peuvent être considérés comme formant des nappes méridiennes ou des nappes cylindriques. Chaque nappe méridienne d'éléments axiaux remplace une nappe méridienne sur deux d'éléments radiaux de la structure de l'exemple 1. De façon similaire, chaque nappe cylindrique d'éléments axiaux replace une nappe cylindrique sur deux d'éléments circonférentiels de la structure de l'exemple 1.

On obtient alors une structure annulaire comportant sept familles d'éléments se décomposant en:

— une radiale,
— une circonférentielle,
— une axiale,
— deux hélicoïdales (à droite et á gauche),
— deux méridiennes obliques.

Les exemples décrits ci-avant ne sont absolument pas limitatifs.

En effet, dans le cadre de la protection définie par les revendications annexées, on pourra apporter à ces exemples de réalisation des modifications portant en particlier sur:

— la nature et les dimensions des éléments,
— leur disposition au sein de chaque famille,
— le mode d'imbrication des éléments des différentes familles entre eux,
— les dimensions et les proportions de la structure,
— sa destination,
— etc.

**Revendications**

1. Structure tridimensionnelle annulaire constituée par l'entrecroisement régulier d'éléments filiformes répartis en plusieurs familles d'éléments, chaque famille étant constituée d'éléments de même type présentant une même disposition particulière au sein de la structure, ladite structure comportant une première et une seconde famille d'éléments méridiens rectilignes (MO1, MO2) obliques par rapport à l'axe de la structure et formant dans chaque famille des nappes méridiennes réparties régulièrement autour de l'axe de la structure et une troisième et une quatrième famille d'éléments hélicoïdaux (HD, HG) formant dans chaque famille des nappes cylindriques de même axe que la structure et réparties régulièrement en direction radiale, l'inclinaison par rapport à l'axe des éléments (MO2) de la première famille étant égale mais de sens opposé à celle des éléments (MO2) de la seconde famille et les trajectoires hélicoïdales des éléments (HD) de la troisième famille ayant le même pas que celle des éléments (HG) de la quatrième famille mais avec un sens opposé, ce pas étant tel que chaque spire d'un élément hélicoidal embrasse une pluralité d'éléments méridiens rectilignes dans chacune desdites nappes méridiennes, structure caractérisée en ce qu'elle comporte en outre une cinquième famille choisie dans le groupe constitué par une famille d'éléments radiaux (R) formant des nappes méridiennes réparties régulièrement autour de l'axe de la structure, une famille d'éléments circonférentiels (C) formant de nappes cylindriques de même axe que la structure et réparties régulièrement en direction radiale et une famille d'éléments axiaux formant des nappes méridiennes ou cylindriques réparties régulièrement dans la structure.

2. Structure selon la revendication 1, caractérisée en ce qu'elle comporte un ensemble de nappes méridiennes constitué par la répétition régulière autour de l'axe de la structure de la séquence formée par une nappe d'éléments méridiens obliques de la première famille (MO1), une nappe d'éléments méridiens obliques de la deuxième famille (MO2) et une nappe d'éléments radiaux (R).

3. Structure selon l'une quelconque des revendications 1 et 2, caractérisée en ce qu'elle comporte un ensemble de nappes cylindriques de même axe que la structure constitué par la répétition régulière de la séquence formée par la superposition d'une nappe d'éléments hélicoïdaux de la troisième famille (HD), une nappe d'éléments hélicoïdaux de la quatrième famille (HG) et une nappe d'éléments circonférentiels (C), cette dernière nappe étant constituée par un élément continu enroulé suivant une hélice à faible pas.

4. Structure selon la revendication 1, caractérisée en ce qu'elle comporte un ensemble de nappes méridiennes constitué par la répétition régulière autour de l'axe de la structure de la séquence formée par une nappe d'éléments méridiens obliques de la première famille (MO1), une nappe d'éléments méridiens obliques de la deuxière famille (MO2) et une nappe méridienne d'éléments axiaux.

5. Structure selon l'une quelconque des revendications 1 et 4, caractérisée en ce qu'elle comporte un ensemble de nappes cylindriques de même axe que la structure et formé par des groupes juxtaposés constitués chacun par une nappe d'éléments hélicoïdaux de la troisième famille (HD), une nappe d'éléments hélicoïdaux de la quatrième famille (HC), et une nappe cylindrique d'éléments axiaux.

6. Structure selon la revendication 1, caractérisée en ce qu'elle comporte une famille d'éléments radiaux (R) une famille d'éléments circonférentiels (C) et une famille d'éléments axiaux.

7. Structure selon l'une quelconque des revendications 1 et 6, caractérisé en ce qu'elle comporte un ensemble de nappes méridiennes constitué par la répétition régulière autour de l'axe de la structure de la séquence formée par une nappe d'éléments méridiens obliques de la première famille (MO1), une nappe d'éléments méridiens obliques de la deuxième famille (MO2), une nappe d'éléments radiaux (R), une nappe d'éléments méridiens obliques de la première famille (MO1), une nappe d'éléments méridients obliques de la deuxième famille (MO2) et une nappe méridienne d'éléments axiaux.

8. Structure selon l'une quelconque des revendications 1, 6 et 7, caractérisée en ce qu'elle comporte un ensemble de nappes cylindriques de même axe que la structure et formé par des groupes juxtaposés constitués chacun par une nappe d'éléments circonférentiels (C), un nappe d'éléments hélicoïdaux de la troisième famille (HD), une nappe d'éléments hélicoïdaux de la quatrième famille (HG), une nappe cylindrique d'éléments axiaux, une nappe d'éléments hélicoïdaux de la troisième famille (HD) et une nappe d'éléments hélicoïdaux de la quatrième famille (HG).

**Patentansprüche**

1. Räumlicher ringförmiger Aufbau

— aus einer regelmäßigen Überkreuzung von in mehreren Elementenfamilien verteilten fadenförmigen Elementen,
— wobei jede Familie aus Elementen desselben Typs besteht und dieselbe spezielle Anordnung innerhalb des Aufbaus hat,
— wobei der Ausbau aufweist: eine erste und eine zweite Familie von geraden meridianen Elementen (MO1, MO2), die gegenüber der Achse des Aufbaus schräg verlaufen und in jeder Familie meridiane Lagen bilden, die um die Achse des Aufbaus regelmäßig verteilt sind, sowie eine dritte und eine vierte Facilie von schraubenförmigen Elementen (HD, HG), die in jeder Familie zylindrische Lagen mit derselben Achse wie der Aufbau bilden und in radialer Richtung regelmäßig verteilt sind, wobei die Neigung gegenüber der Achse der Elemente (MO1) der ersten Familie gleich jedoch entgegengesetzt zu derjenigen der Elemente (MO2) der zweiten Familie ist und die schraubenförmigen Verläufe der Elemente (HD) der dritten Familie dieselbe Steigung wie diejenige der Elemente (HG) der vierten Familie jedoch mit entgegengesetzter Richtung haben, wobei diese Steigung so gr ß ist, daß jede Windung eines schraubenförmigen Elements mehrere gerade meridiane Elemente in jeder der meridianen Lagen umgreift, gekennzeichnet
— durch eine fünfte Familie, die innerhalb einer Gruppe ausgewählt ist, die gebildet ist durch: eine Familie von radialen Elementen (R), die um die Achse des Ausbaus regelmäßig verteilte meridiane Lagen Bildet, eine Familie von Umfangselementen (C), die zylindrische Lagen bildet, die dieselbe Achse wie der Aufbau haben und in radialer Richtung regelmäßig verteilt sind, und eine Familie von axialen Elementen, die im Aufbau regelmäßig verteilte meridiane oder zylindrische Lagen bildet.

2. Aufbau nach Anspruch 1, gekennzeichnet

— durch eine Anordnung von meridianen Lagen, die gebildet ist durch die um die Achse des Ausbaus erfolgende regelmäßige Wiederholung der Folge, die gebildet ist durch: eine Lage von schrägen meridianen Elementen der ersten Familie (MO1), eine Lage von schrägen meridianen Elementen der zweiten Familie (MO2) und eine Lage von radialen Elementen (R).

3. Aufbau nach einem der Ansprüche 1 und 2, gekennzeichnet

— durch eine Anordnung von dieselbe Achse wie der Aufbau aufweisenden zylindrischen Lagen, die gebildet ist durch die regelmäßige Wiederholung der Folge, die gebildet ist durch die Überplagerung: einer Lage von schraubenförmigen Elementen der dritten Familie (HD), einer Lage von schraubenförmigen Elementen der vierten Familie (HG) und einer Lage von Umfangselementen (C), wobei diese letzte Lage aus einem durchgehenden Elementen besteht, das Längs einer Schraubenlinie mit geringer Steigung aufgewickelt ist.

4. Aufbau nach Anspruch 1, gekennzeichnet

— durch eine Anordnung von meridianen Lagen, die gebildet ist durch die um die Achse des Aufbaus erfolgende regelmäßige Wiederholung der Folge, die gebildet ist durch: eine Lage von schrägen meridianen Elementen der ersten Familie (MO1), eine Lage von schrägen meridianen Elementen der zweiten Familie (MO2) und eine meridiane Lage von axialen Elementen.

5. Aufbau nach einem der Ansprüche 1 und 4, gekennzeichnet

— durch eine Anordnung von zylindrischen Lagen, die dieselbe Achse wie der Aufbau aufweist und durch nebeneinanderliegende Gruppen gebildet ist, von denen jede gebildet ist durch: eine Lage von schraubenförmigen Elementen der dritten Familie (HD), eine Lage von schraubenförmigen Elementen der vierten Familie (HG) und eine zylindrische Lage von axialen Elementen.

6. Aufbau nach Anspruch 1, gekennzeichnet

— durch eine Familie von radialen Elementen (R), eine Familie von Umfangselementen (C) und eine Familie von axialen Elementen.

7. Aufbau nach einem der Ansprüche 1 und 6, gekennzeichnet

— durch eine Anordnung von meridianen Lagen, die gebildet ist durch die um die Achse des Ausbaus erfolgende regelmäßige Wiederholung der Folge, die gebildet ist durch: eine Lage von schrägen meridianen Elementen der ersten Familie (MO1), eine Lage von schrägen meridianen Elementen der zweiten Familie (MO2), eine Lage von radialen Elementen (R), eine Lage von schrägen meridianen Elementen der ersten Familie (MO1), einer Lage von schrägen meridianen Elementen der zweiten Familie (MO2) und eine Lage von axialen Elementen.

8. Aufbau nach einem der Ansprüche 1, 6 und 7, gekennzeichnet

— durch eine Anordnung von zylindrischen Lagen, die dieselbe Achse wie der Aufbau haben und durch nebeneinanderliegende Gruppen gebildet sind, von denen jede gebildet ist durch: eine Lage von Umfangselementen (C), eine Lage von schraubenförmigen Elementen der dritten Familie (HD), eine Lage von schraubenförmigen Elementen der vierten Familie (HG), eine zylindrische Lage von axialen Elementen, eine Lage von schraubenförmigen Elementen der dritten Familie (HD) und eine Lage von schraubenförmigen Elementen der vierten Familie (HG).

## Claims

1. Annular three-dimensional structure constituted by the regular criss-crossing of filiform elements distributed in a plurality of families of elements, each family being composed of elements of a same type having a same particular position within the structure, said structure comprising a first and a second families of meridian rectilinear elements (MO1, MO2), oblique with respect to the axis of the structure and forming, in each family, meridian sheets regularly distributed about the axis of the structure, and a third and a fourth families of helical elements (HD, HG) forming, in each family, cylindrical sheets of the same axis as the structure and distributed regularly in radial direction, the inclination with respect to the axis of the elements (MO1) of the first family being equal but opposite to that of the elements (MO2) of the second family and the helical paths of the elements (HD) of the third family having the same pitch as those of the elements (HG) of the fourth family, but with an opposite orientation, this pitch being such that each turn of a helical element embraces a plurality of meridian rectilinear elements in each of said meridian sheets, structure characterized in that a fifth family is further provided which is selected from the group constituted by a family of radial elements (R) forming meridian sheets distributed regularly about the axis of the structure, a family of circumferential elements (C) forming cylindrical sheets having the same axis as the structure and distributed regularly in radial direction and a family of axial elements forming meridian or cylindrical sheet distributed regularly in the structure.

2. Structure according to claim 1, characterized in that said structure comprises an assembly of meridian sheets constituted by the regular repetition, around the axis of the structure, of the sequence consisting of a sheet of oblique meridian elements of the first family, (MO1), a sheet of oblique meridian elements of the second family (MO2) and a sheet of radial elements (R).

3. Structure according to any one of claims 1 or 2, characterized in that said structure comprises an assembly of cylindrical sheets having the same axis as the structure and constituted by the regular repetition of the sequence formed by superimposing a sheet of helical elements of the third family (HD), a sheet of helical elements of the fourth family (HG) and a sheet of circumferential elements (C), this last mentioned sheet being constituted by a continuous element wound helically with a low pitch.

4. Structure according to claim 1, characterized in that said structure comprises an assembly of meridian sheets constituted by the regular repetition, around the axis of the structure, of the sequence consisting of a sheet of oblique meridian elements of the first family (MO1), a sheet of oblique meridian elements of the second family (MO2) and a meridian sheet of axial elements.

5. Structure according to any one of claims 1 and 4, characterized in that said structure comprises an assembly of cylindrical sheets having the same axis as the structure and formed by juxtaposed groups each one consisting of a sheet of helical elements of the third family (HD), a sheet of helical elements of the fourth family (HG), and a cylindrical sheet of axial element.

6. Structure according to claim 1, characterized in that said structure comprises a family of radial elements (R), a family of circumferential elements (C) and a family of axial elements.

7. Structure according to any one of claims 1 and 6, characterized in that said structure comprises an assembly of meridian sheets constituted by the regular repetition, around the axis of the structure, of the sequence consisting of a sheet of oblique meridian elements of the first family, (MO1), a sheet of oblique meridian elements of the second family (MO2), a sheet of radial elements (R), a sheet of oblique meridian elements of the first family (MO1), a sheet of oblique meridian elements of the second family (MO2) and a meridian sheet of axial elements.

8. Structure according to any one of claim 1, 6 and 7, characterized in that the said structure comprises an assembly of cylindrical sheets having the same axis as the structure and formed by juxtaposed groups each one consisting of a sheet of circumferential elements (C), a sheet of helical elements of the third family (HD), a sheet of helical elements of the fourth family (HG), a cylindrical sheet of axial elements, a sheet of helical elements of the third family (HD) and a sheet of helical elements of the fourth family (HG).

Fig.1

Fig.2

Fig. 3